Europäisches Patentamt

(19) European Patent Office

Office européen des brevets

(11) Publication number: **0 144 269**
**B1**

## (12) EUROPEAN PATENT SPECIFICATION

(45) Date of publication of patent specification: **28.10.87**

(21) Application number: **84402462.0**

(22) Date of filing: **30.11.84**

(51) Int. Cl.⁴: **A 23 G 3/30**

(54) Process for sweetening indented chewing gum with an L-aspartic acid sweetening derivative.

(30) Priority: **01.12.83 US 557039**

(43) Date of publication of application:
**12.06.85 Bulletin 85/24**

(45) Publication of the grant of the patent:
**28.10.87 Bulletin 87/44**

(84) Designated Contracting States:
**AT BE CH DE FR GB IT LI LU NL SE**

(56) References cited:
**EP-A-0 027 024**
**WO-A-84/02450**
**GB-A- 650 067**
**US-A-3 962 463**
**US-A-3 985 913**

(73) Proprietor: **NABISCO BRANDS INC.**
**Nabisco Brands Plaza**
**Parsippany New Jersey 07054 (US)**

(72) Inventor: **Puglia, Wayne Joseph**
**22 Oak Point Drive West**
**Bayville New York 11709 (US)**
Inventor: **Donna, Maria Rosa**
**1365 Shippan Avenue**
**Stamford Connecticut 06902 (US)**

(74) Representative: **Bonnetat, Christian et al**
**Cabinet PROPI Conseils 23 rue de Léningrad**
**F-75008 Paris (FR)**

Courier Press, Leamington Spa, England.

## Description

This invention relates to a method for sweetening chewing gum with an L-aspartic acid sweetening derivative and to products obtained thereby.

Aspartame, L-aspartyl-L-phenylalanine methyl ester, a derivative of L-aspartic acid, has recently been approved by the Food and Drug Administration as a natural sweetener for use in food. It ordinarily is unstable when incorporated in chewing gum. Aspartame decomposes in the presence of moisture and reacts with aldehyde-containing flavorings, such as cinnamon, over extended periods of time. Thus, chewing gum compositions obtained by admixing the aspartame with gum base and other chewing gum ingredients prior to the conventional rolling and extrusion steps exhibit substantial loss of sweetening. To obtain acceptable sweetening levels over extended periods, an inordinate amount of aspartame must be used to compensate for subsequent losses.

Attempts have been made to protect aspartame from moisture and gum components by encapsulating a solid aspartame with coating materials such as cellulose ethers, cellulose esters, edible vinyl polymers, gelatin, and the like, as disclosed in US—A—4,384,004, US—A—4,122,195 and US—A—4,139,639. However, even when encapsulated aspartame is incorporated into the gum, substantial decomposition of the aspartame results. It is believed that the integrity of the encapsulation is: 1) physically destroyed during mixing, and 2) destroyed by dissolution into gum ingredients such as plasticizers. Decomposition of the aspartame over time could also result from migration of gum components through the encapsulant.

In US—A—4,374,858 and the corresponding published EP—A—0 027 024, the sweetness stability of aspartame in chewing gum is improved by applying onto the surface of the chewing gum piece a dusting of a material comprising aspartame. The aspartame is applied in pure powdered form, in encapsulated form or combinations thereof. The dusting can be by means of gravity flow from a helical auger or rollers. However, drawbacks in coating the aspartame onto the chewing gum surface in dry form in the manner taught by US—A—4,374,858 are: 1) physical loss of the aspartame from the surface during subsequent material handling steps such as transport of the coated gum to wrapping equipment and the wrapping operation, 2) inconsistent control of the amount of aspartame applied to the gum surface and 3) an undesirably strong initial sweetness impact.

Published International Patent Application WO—A—84/02450 describes a process for applying aspartame, together with the sweetness enhancer thaumatin or monellin, to the surface of chewing gum compositions using conventional dusting procedures, spray powder processes, by spraying in the form of an aerosol, or by electrostatic deposition.

U.S. Patent 3,962,463 describes a process for printing solid flavor particles on the surface of chewing gum, in which the flavor particles, which may be microencapsulated, are printed in the form of an aqueous slurry. The flavor particles penetrate the surface of the chewing gum to a depth of about 35 to about 250 μm, the interior of the chewing gum being substantially free of the flavor particles.

The present invention provides an economical process for sweetening chewing gum with an L-aspartic acid sweetening derivative, such as L-aspartyl-L-phenylalanine methyl ester (aspartame) which achieves accurate and consistent control over the amount of the sweetener applied to the chewing gum, minimizes physical loss of the sweetener during subsequent material handling steps, and minimizes decomposition of the sweetener during both chewing gum manufacture and storage of the finished product.

The aspartame sweetened chewing gum of the present invention does not contain "hot spots" due to high concentrations of the sweetener in or on the chewing gum. An acceptable level of sweetness is exhibited by the products during their shelf lives of at least about six months.

The present invention relates to a process for sweetening chewing gum with an L-aspartic acid sweetening derivative, such as L-aspartyl-L-phenylalanine methyl ester (aspartame) by applying a solid L-aspartic acid sweetening derivative to at least a portion of the surface of the chewing gum. In the process of the invention, prior to the application of the sweetening derivative, a plurality of indentations are formed in the surface of the chewing gum and the L-aspartic acid sweetening derivative is applied into these indentations. Optionally, in the process of the invention, prior to the application of the sweetening derivative to the chewing gum, a dusting material may be applied to the chewing gum composition to reduce its stickiness, the dusted chewing gum formed, and excess dusting material removed from the formed chewing gum composition.

Also, in the process of the invention, the aspartame or other sweetening derivative applied may be in pure powder form or encapsulated form or both. The amount of aspartame applied to the indented gum surface is sufficient to provide an aspartame content of less than about 0.3% by weight, preferably from about 0.1% to about 0.25% by weight, based on the total weight of the final gum product. Aspartame within the indentations is protected from physical loss due to subsequent cutting, transport and wrapping. The indentations provide for accurate and consistent control over the amount of aspartame on the gum surface.

The aspartame in the indentations does not result in an objectionably high level of initial sweetness because: 1) the surface are of the aspartame which is exposed initially to the taste buds is small compared to the exposed surface area obtained by dusting the aspartame onto a flat gum surface, and 2) the indentations hold the aspartame on the gum by preventing lateral movement of the aspartame across the gum surface. The aspartame sweetened gum of the present invention exhibits an acceptable level of sweetness during an extended shelf life of at least about six months.

The sweetener used in the present invention is preferably L-aspartyl-L-phenylalanine methyl ester, known as aspartame. Other L-aspartic acid sweetening derivatives may also be used. Such derivatives are disclosed in U.S. Patent 3,955,000 at column 3, line 63 to column 4, line 35. The following description will be directed to aspartame with the understanding that other L-aspartic acid sweetening derivatives are included as well.

The amount of aspartame applied onto the chewing gum either singly or in combination with other sweeteners present in the gum should be sufficient to produce an acceptably sweet chewing gum. In general, the aspartame applied on the chewing gum surface amounts to less than about 0.3% by weight, preferably from about 0.1% to about 0.25% aspartame by weight based on the total weight of the final gum product. It is found that for the same sweetening effect, the amount of aspartame when applied to a gum surface with indentations is about one-third of that amount needed for an equivalent sweetening effect when incorporated into the gum composition. The aspartame which is used may be in pure powdered form, encapsulated form or both. The above percentages of aspartame are based upon the weight of aspartame without the encapsulant. Suitable, commercially available encapsulated forms include starch, polyvinyl acetate, gum arabic, and fat encapsulated aspartame. Encapsulated aspartame generally contains from about 10% to about 90% by weight aspartame, more typically about 20% to about 50% by weight aspartame, based upon the weight of the encapsulated aspartame.

Sweeteners including natural sugars, sugar alcohols and artificial sweeteners and lubricants can be used in conventional amounts, alone or in mixtures, as dusting materials or agents to prevent the gum form sticking to equipment during processing. The sweeteners, in combination with the aspartame, are used in amounts which provide an acceptable level of sweetness. Suitable sugar alcohols include manitol, sorbitol and the like, or mixtures of the above. The lubricants are those conventionally employed in chewing gum manufacture such as calcium carbonate, talc or starch.

As in conventional manner, the dusting materials or agents are applied to the chewing gum prior to and preferably during the first rolling step. Excess dusting materials or agents can be removed by a rotating brush and a vacuum exhaust system for recycle to the dusting operation. The dusting materials or agents should be applied and the excess exhausted or otherwise removed prior to formation of the indentations. The indenstations are then more available to the aspartame and excessive reduction of cohesiveness of the aspartame in the indentations due to lubrication is avoided.

It is preferable to blend additional amounts of at least one dusting material with the aspartame prior to application of the aspartame into the indentations. The amount of aspartame retained in the indentations however, should be sufficient to impart an acceptable level of sweetness to the chewing gum. Blending of the aspartame with at least one dusting material can be used to control the distribution of aspartame and rate of the release of the aspartame from the indentations to avoid objectionable initial sweetening responses. For example, for a given indentation depth and a given amount of aspartame, blending it with a dusting agent would require more indentations to accommodate the blend.

The indendations may be produced by rollers having rows of solid projections on their surfaces. These embossing or imprinting rollers pass over the gum, leaving identical impressions thereon. The indentations may be produced as part of the conventional rolling operation for production of gum slabs having a desired thickness. Preferably, however, the indentations are applied to the gum after it has been rolled into sheets. The indentations on the sheet can be made before or after cutting the sheet into strips or even after cutting the strips into the final gum piece size. However, indentation of the sheet prior to any cutting is preferred for easier material handling and lower losses or less recycling of aspartame. Indentations in extruded gum can be made by the extruder die or by rolling the extruded gum with rollers having projections. The indentations can be applied to one or more of the gum surfaces but preferably to only one surface.

The embossing roller can be electrostatically charged for holding of the aspartame and optional dusting materials on the projections. The gum is provided with an opposite charge with conventional means. As the charged embossing roller, having a positive charge for example, rotates into the oppositely charged gum surface, the aspartame and optional dusting material is electrostatically transferred into the indentations.

The depth, number and size of projections are not critical but they should be sufficient to hold an amount of aspartame which provides an acceptable level of sweetness without an objectionable initial sweetness impact. Generally, the amount of surface area provided by the indentations is less than about 10%, more typically less than about 5%, of the total surface area of the gum piece. The indentations are preferably placed substantially uniformly across the gum piece surface to assure the attainment of a substantially uniform sweetening response and the avoidance of "hot spots" or excessive local concentrations of the aspartame.

Even though the aspartame is considerably concentrated in the indentations, the sweetened chewing gum of the present invention exhibits a substantially uniform and pleasant sweetening response because the surface area of the aspartame exposed to the taste buds is initially low and as the gum is chewed, the aspartame becomes incorporated into the gum composition. Additionally, the aspartame within the indentations is more tightly held than is aspartame on a flat gum surface because the side walls of the indentations prevent lateral movement of the aspartame.

The depth of the indentations suitably may range from about one-tenth to about one-half of the thickness of the gum pieces but must not perforate the gum pieces. The indentations may be in the shape of grooves, circles, squares, semi-circles, "C-shaped", a shape representing a trademark or the like. Grooves are preferred for simplicity.

The aspartame, or a blend of at least one dusting material with aspartame can be transported by a helical auger or belt conveyor to a vibrating screen having mesh openings which permit gravity flow of the aspartame particles or blend of dusting materials and aspartame onto the moving gum slab underneath. The aspartame and optional dusting materials can also be applied by conventional dusting rollers. The rollers used to form the indentations can also be used to simultaneously apply the aspartame. The embossing roller can be electrostatically charged, as indicated above, or uncharged. The aspartame is preferably applied only to the projections on the roller which directly transfer the aspartame and optional dusting material into the indentations. Commercially available embossing or imprinting machines and dusting machines can be used to carry out the present invention.

The aspartame and optional dusting materials which are not within the indentations can be left on the gum surface or can be transferred into the indentations by a rotating or stationary brush, by a roller, or combinations thereof. Preferably sunstantially all of the aspartame applied to the chewing gum composition is within the one or more indentations. The indentations can be partly or substantially completely filled. Once the indentations are filled with aspartame and optional dusting materials some of it will be retained by the raised portions of the chewing gum surface. However, excess, loosely held aspartame and optional dusting materials will be removed by the brushes or rollers. The portion which is removed from the gum surface can be recycled for application to fresh gum slabs. Conventional vacuum exhaust systems can be used to recycle the excess aspartame and optional dusting materials. An optional roller can then be used to press into the indentations any aspartame or dusting mateials which is on the raised portions of the gum or which protrude from the indentations.

The chewing gum compositions contemplated by the present invention comprises all types of chewing gums and chewing gum formulations including sugared or sugarless chewing gum known to those skilled in the art. Typical chewing gum compositions comprise a chewing gum base, a softening agent, a bulking agent or sweetener, and a flavoring agent.

Exemplary of suitable chewing gum bases are chicle, or substitutes thereof, guttakay, sorva, jelutong, synthetic polymers such as polyvinyl acetate, synthetic resins, rubbers and the like, and mixtures of the above ingredients. The proportion of the gum base used in the formulation generally varies with the type of gum base material selected and other ingredients used in making up the final gum product. The amount of gum base generally ranges from about 15% by weight to about 40% by weight, preferably from about 20% to about 30% by weight, based upon the weight of the final product.

Known softening agents or plasticizers such as lecithin, glycerine, lanolin, propylene glycol and the like or mixtures thereof are incorporated into the gum base to achieve the desired consistency and texture. The amount of softener employed in the formulation typically varies from about 1% to about 5% by weight based on the weight of the final product.

The following agent used in the formulation may be essential oils, synthetic flavors, or mixtures of the above. Popular flavors are cinnamon, wintergreen, spearmint, peppermint, fruit flavors and licorice. Flavoring agents generally are used in amounts of about 0.75% by weight to about 1.5% by weight based on the weight of the final product.

The bulking agents or additional sweeteners which can be used in preparing the chewing gum are known to those skilled in the art. Exemplary thereof are sugars such as sucrose, glucose, dextrose, fructose and mixtures thereof; artificial sweeteners such as saccharine and its salts, Acesulfam-K (the potassium salt of 3,4 - dihydro - 6 - methyl - 1,2,3 - oxathiazin - 4 - one - 2,2 - dioxide), glycyrrhizin, thaumatin, stevia, and mixtures thereof; and sugar alcohols such as sorbitol, sorbitol syrup, xylitol, mannitol and mixtures thereof.

The choice of compatible ingredients and proportions of bulking agents or sweeteners to produce an acceptably sweet chewing gum are also known. The amount of bulking agent or sweetener generally ranges from about 55% by weight to about 80% by weight, based upon the weight of the final product.

The chewing gum formulations are prepared in conventional manner. Typically, the gum base, softening agent, bulking agent or sweetener, and flavoring agent, are sequentially added and mixed, or blended, in a standard dough mixer equipped with sigma blades. In known processes for incorporation of aspartame into the gum, the aspartame is added last with minimal mixing. the gum is then extruded into ropes or rolled into flat sheets, cut and wrapped. Extrusion followed by rolling can also be used to produce flat sheets or ropes. Additional sweetener or flavoring agent may be applied before cutting or wrapping. Known dusting agents such as calcium carbonate, talc, sugar alcohols, sugar, starch, and mixtures thereof are generally applied by dusting them onto the gum surface prior to or during one or more of the rolling, cutting, or wrapping operations. In the process of the present invention, the aspartame is applied to the surface of the sheet of gum simultaneously with or after imprinting, but preferably prior to cutting. The conventional dusting agents are preferably applied to the gum both prior to imprinting and blended with the aspartame.

The present invention is further illustrated in the following examples. All percentages, parts and proportions are by weight.

Example 1

The relative amounts of the ingredients of the chewing gum composition to which the aspartame is applied are:

| Ingredient | Approximate weight percent |
|---|---|
| Chewing Gum Base | 30 |
| Softener (lecithin) | 0.9 |
| Sorbitol powder | 43 |
| Sorbitol solution (70% solids) | 25 |
| Flavor (peppermint) | 1.1 |
| | 100% |

The chewing gum composition is prepared in conventional manner in a dough mixture equipped with sigma-blades, rolled into a sheet, scored into gum slabs and cut into blocks. The sticks were imprinted with a hand roller having straight circumferential projections to obtain indentations thereon. The indentations extended the length of the gum stick, were about 0.25 mm deep and about 0.25 mm wide. Each gum stick had 18 indentations spaced about 3 mm apart. The encapsulated aspartame and aspartame-mannitol blend were sprinkled by hand onto the imprinted gum sticks. The gum sticks were then rolled with a smooth roller to transfer the aspartame or the blend into the indentations and to remove the excess from the raised portions of the gum stick. Samples of the gum sticks were placed in a foil-lined pouch which was then heat sealed. The gum samples were subjected to a three-week accelerated stability test at 30% relative humidity and 40.6°C (105°F). Aspartame content of the samples was determined by the ninhydrin method at initiation and termination of the three-week accelerated test. The accelerated test is equivalent to a 7 to 8 month shelf life under normal storage conditions.

A summary of the results of the analyses is:

| Sample No. and aspartame form | Initial aspartame content g/stick | Aspartame content after aging, w/% | Aspartame retention, (%) |
|---|---|---|---|
| 1. 50% Pure Powder 50% Mannitol | 0.0102 | 0.0101 | 99 |
| 2. Durkee Fat encapsulated 33% aspartame | 0.0087 | 0.0076 | 87 |

The sweetness stability of the aspartame sweetened gum was compared to the sweetness stability of an aspartame sweetened chewing gum having aspartame incorporated into the chewing gum composition set above. The aspartame used in the control was in pure powdered form. The amount of aspartame incorporated into the control was 0.25% aspartame, based upon the total weight of the aspartame sweetened gum composition. The control gum sticks were prepared as above except the aspartame was the last ingredient added to the dough mixer and mixing was continued to obtain substantial homogeneity. Samples of the gum sticks were placed and heat sealed in a foil-lined pouch as above. The gum samples were subjected to a three-week accelerated test, at 30% relative humidity and 40.6°C (105°F). The aspartame content of the samples was determined by the ninhydrin method at initiation and termination of the accelerated test. The result of the analyses were an aspartame content at initiation of the accelerated test of 0.22%, a final aspartame content of 0.168%, for an aspartame retention during the three-week test period of about 76%.

Example 2

Aspartame sweetened gum sticks were prepared as in Example 1, Sample 2 except cinnamon was used as the flavoring agent instead of peppermint. The results of the three-week accelerated stability test were an initial aspartame content of 0.0101 g/stick, an aspartame content after aging of 0.0089 g/stick, and an aspartame retention of 88%.

The imprinting process of the present invention can be used to provide accurate and consistent control over the amount of and distribution of sweetening compositions which do not contain aspartame on a gum

**0 144 269**

surface. For example, sorbitol, mannitol, saccharine and its salts, Acesulfam-K, and mixtures thereof can be applied into indentations in the gum surface electrostatically in amounts which provide in acceptable level of sweetness in accordance with the present invention.

## Claims

1. A process for sweetening chewing gum with an L-aspartic acid sweetening derivative comprising applying a solid L-aspartic acid sweetening derivative to at least a portion of the surface of the chewing gum characterized in that, prior to the application of the sweetening derivative, a plurality of indentations are formed in the surface of the chewing gum and the L-aspartic acid sweetening derivative is applied into these indentations.

2. A process according to claim 1 characterised in that the L-aspartic acid sweetening derivative is aspartame.

3. A process according to claim 2 characterized in that the aspartame content of the sweetened chewing gum is less than 0.3% by weight, based on the weight of the aspartame sweetened chewing gum.

4. A process according to claim 3 characterized in that the weight percent of aspartame is from 0.1% to 0.25%.

5. A process according to any one of claims 2 to 4 characterized in that substantially all of the aspartame is applied within the indentations.

6. A process according to any one of claims 2 to 5 characterized in that said indentations are formed and the aspartame is applied into the indentations simultaneously.

7. A process according to any one of the preceding claims characterized in that the indentations are formed substantially uniformly over a surface of the chewing gum.

8. A process according to any one of the preceding claims characterized in that the indentations are at least substantially filled with the sweetening derivative.

9. A process according to any one of the preceding claims characterized in that less than 10% of the surface of the chewing gum piece is indented.

10. A process according to any one of the preceding claims characterized in that the indentations are in the form of grooves.

11. A process according to any one of the preceding claims characterized in that substantially all of the aspartame is held within the indentations, and a dusting powder is also placed in the indentations.

12. A process according to any one of the preceding claims characterized in that, prior to the application of the sweetening derivative, at least one dusting material is applied to the surface of the chewing gum composition to reduce its stickiness, the dusted chewing gum composition is formed, and excess dusting material is removed from the surface of the formed chewing gum composition.

13. A process according to any one of the preceding claims characterized in that, after the sweetening derivative has been applied to the chewing gum surface, excess sweetening derivative is removed from the surface of the formed chewing gum.

14. A process according to any one of the preceding claims characterized in that the sweetening derivative is applied into the indentations electrostatically.

15. A process according to claim 14 characterized in that the formed chewing gum composition is negatively charged and a positively charged embossing roller is used to form the indentations and to apply the sweetening derivative into the indentations.

16. A process according to any one of the preceding claims characterized in that the sweetening derivative is applied as a blend with at least one dusting material.

17. A process according to claim 16 characterized in that the dusting material is mannitol.

18. A process according to claim 17 characterized in that excess sweetening derivative and dusting material are removed from the surface of the chewing gum composition by brushing the chewing gum surface and applying a vacuum to the chewing gum surface.

19. A process according to claim 18 characterized in that the sweetening derivative and dusting material blend is applied into the indentations by gravity flow onto the surface, followed by the brushing of the chewing gum surface.

### Patentansprüche

1. Verfahren zum Süßen von Kaugummi mit einem L-Asparaginsäurederivat-Versüßungsmittel, welches die Anwendung eines festen L-Asparaginsäurederivat-Versüßungsmittels auf wenigstens einen Teil der Oberfläche des Kaugummis umfaßt, dadurch gekennzeichnet, daß vor der Anwendung des Versüßungsmittel-Derivats eine Mehrzahl von Vertiefungen in der Oberfläche des Kaugummis geformt wird und das L-Asparaginsäurederivat-Versüßungsmittel in diese Vertiefungen eingebracht wird.

2. Verfahren nach Anspruch 1, dadurch gekennzeichnet, daß das L-Asparaginsäurederivat-Versüßungsmittel Aspartame ist.

3. Verfahren nach Anspruch 2, dadurch gekennzeichnet, daß der Aspartamegehalt des gesüßten Kaugummis weniger als 0,3 Gewichtsprozent beträgt, bezogen auf das Gewicht des mit Aspartame gesüßten Kaugummis.

6

4. Verfahren nach Anspruch 3, dadurch gekennzeichnet, daß der Gewichtsanteil des Aspartame zwischen 0,1 bis 0,25% beträgt.

5. Verfahren nach einem der Ansprüche 2 bis 4, dadurch gekennzeichnet, daß im wesentlichen das ganze Aspartame innerhalb der Vertiefungen angewendet wird.

6. Verfahren nach einem der Ansprüche 2 bis 5, dadurch gekennzeichnet, daß diese Vertiefungen geformt werden und das Aspartame gleichzeitig in diese Vertiefungen eingebracht wird.

7. Verfahren nach einem der vorhergehenden Ansprüche, dadurch gekennzeichnet, daß die Vertiefungen im wesentlichen gleichmäßig über eine Oberfläche des Kaugummis ausgebildet werden.

8. Verfahren nach einem der vorhergehenden Ansprüche, dadurch gekennzeichnet, daß die Vertiefungen mindestens im wesentlichen mit dem Versüßungsmittel-Derivat gefüllt werden.

9. Verfahren nach einem der vorhergehenden Ansprüche, dadurch gekennzeichnet, daß weniger als 10% der Oberfläche des Kaugummis mit Vertiefungen versehen ist.

10. Verfahren nach einem der vorhergehenden Ansprüche, dadurch gekennzeichnet, daß die Vertiefungen die Form von Rillen aufweisen.

11. Verfahren nach einem der vorhergehenden Ansprüche, dadurch gekennzeichnet, daß im wesentlichen das ganze Aspartame im Inneren der Vertiefungen festgehalten wird, und daß auch ein Streupulver in die Vertiefungen eingebracht wird.

12. Verfahren nach einem der vorhergehenden Ansprüche, dadurch gekennzeichnet, daß vor der Anwendung des Versüßungsmittel-Derivates wenigstens sin Streumaterial auf die Oberfläche des Kaugummigemisches aufgebracht wird, um seine Klebrigkeit zu verringern, daß das bestreute Kaugummigemisch geformt wird und überschüssiges Streumaterial von der Oberfläche des geformten Kaugummigemisches entfernt wird.

13. Verfahren nach einem der vorhergehenden Ansprüche, dadurch gekennzeichnet, daß nach der Anwendung des Versüßungsmittel-Derivates auf die Kaugummioberfläche überschüssiges versüßungsmittel-Derivat von der Oberfläche des geformten Kaugummis entfernt wird.

14. Verfahren nach einem der vorhergehenden Ansprüche, dadurch gekennzeichnet, daß das Versüßungsmittel-Derivat elektrostatisch in die Vertiefungen eingebracht wird.

15. Verfahren nach Anspruch 14, dadurch gekennzeichnet, daß das Kaugummigemisch negativ geladen ist und eine positiv geladene Prägewalze angewendet wird, um die Vertiefungen zu formen und das Versüßungsmittel-Derivat in die Vertiegungen einzubringen.

16. Verfahren nach einem der vorhergehenden Ansprüche, dadurch· gekennzeichnet, daß das Versüßungsmittel-Derivat als eine Mischung mit wenigstens einem Streumaterial angewendet wird.

17. Verfahren nach Anspruch 16, dadurch gekennzeichnet, daß das Streumaterial Mannit ist.

18. Verfahren nach Anspruch 17, dadurch gekennzeichnet, daß das überschüssige Versüßungsmittel- Derivat und das Streumaterial von der Oberfläche des Kaugummigemisches durch Abbürsten der Oberfläche des Kaugummis und Anwendung eines Unterdruckes an der Kaugummioberfläche entfernt werden.

19. Verfahren nach Anspruch 18, dadurch gekennzeichnet, uß das Gemisch von Versüßungsmittel- Derivat und Streumaterial in die Vertiefungen durch Abließen unter Schwerkrafteinwirkung auf die Oberfläche gebracht wird mit nachfolgendem Abbürsten der Kaugummioberfläche.

**Revendications**

1. Procédé d'édulcoration de gomme à mâcher avec un dérivé édulcorant d'acide L-aspartique, comprenant l'application d'un dérivé édulcorant d'acide L-aspartique solide à au moins une partie de la surface de la gomme à mâcher, caractérisé en ce que, avant l'application du dérivé édulcorant, une pluralité d'indentations sont formées à la surface de la gomme à mâcher et le dérivé édulcorant d'acide L-aspartique est appliqué dans ces indentations.

2. Procédé selon la revendication 1, caractérisé en ce que le dérivé édulcorant d'acide L-aspartique est de l'aspartame.

3. Procédé selon la revendication 2, caractérisé en ce que la teneur en aspartame de la gomme à mâcher édulcorée est inférieure à 0,3% en poids, en se basant sur le poids de la gomme à mâcher édulcorée à l'aspartame.

4. Procédé selon la revendication 3, caractérisé en ce que le pourcentage pondéral d'aspartame est compris entre 0,1 et 0,25%.

5. Procédé selon l'une quelconque des revendications 2 à 4, caractérisé en ce que sensiblement tout l'aspartame est appliqué à l'intérieur des indentations.

6. Procédé selon l'une quelconque des revendications 2 à 5, caractérisé en ce que lesdites indentations sont formées et l'aspartame est appliqué dans les indentations simultanément.

7. Procédé selon l'une quelconque des revendications précédentes, caractérisé en ce que les indentations sont formées sensiblement uniformément sur une surface de la gomme à mâcher.

8. Procédé selon l'une quelconque des revendications précédentes, caractérisé en ce que les indentations sont au moins sensiblement remplies du dérivé édulcorant.

9. Procédé selon l'une quelconque des revendications précédentes, caractérisé en ce que moins de 10% de la surface de la tablette de gomme à mâcher est indentée.

10. Procédé selon l'une quelconque des revendications précédentes, caractérisé en ce que les indentations sont réalisées sous forme de rainures.

11. Procédé selon l'une quelconque des revendications précédentes, caractérisé en ce que sensiblement tout l'aspartame est maintenu à l'intérieur des indentations, et une poudre de saupoudrage est également placée dans les indentations.

12. Procédé selon l'une quelconque des revendications précédentes, caractérisé en ce que, avant l'application du dérivé édulcorant, au moins une matière de saupoudrage est appliquée à la surface de la composition de gomme à mâcher pour réduire son caractére collant, la composition de gomme à mâcher saupoudrée est formée, et la matière de saupoudrage en excès est éliminée de la surface de la composition de gomme à mâcher formée.

13. Procédé selon l'une quelconque des revendicataions précédentes, caractérisée en ce que, après l'application du dérivé édulcorant à la surface de la gomme à mâcher, le dérivé édulcorant en excès est retiré de la surface de la gomme à mâcher formée.

14. Procédé selon l'une quelconque des revendications précédentes, caractérisé en ce que le dérivé édulcorant est appliqué électrostatiquement dans les indentations.

15. Procédé selon la revendication 14, caractérisé en ce que la composition de gomme à mâcher formée est chargée négativement et un galet de gravure chargé positivement est utilisé pour former les indentations et appliquer le dérivé édulcorant dans les indentations.

16. Procédé selon l'une quelconque des revendications précédentes, caractérisé en ce que le dérivé édulcorant est appliqué sous forme d'un mélange avec au moins une matière de saupoudrage.

17. Procédé selon la revendication 16, caractérisé en ce que la matière de saupoudrage est du manitol.

18. Procédé selon la revendication 17, caractérisé en ce que l'excès de dérivé édulcorant et de matière de saupoudrage est éliminé de la surface de la composition de gomme à mâcher en brossant la surface de la gomme à mâcher et en appliquant un vide à ladite surface.

19. Procédé selon la revendication 18, caractérisé en ce que le mélange de dérivé édulcorant et de matière de saupoudrage est appliqué dans les indentations par un écoulement par gravité sur la surface, suivi par le brossage de la surface de la gomme à mâcher.

8